(19) **Europäisches Patentamt**
**European Patent Office**
**Office européen des brevets**

(11) **EP 4 641 939 A1**

(12) **EUROPEAN PATENT APPLICATION**

(43) Date of publication:
**29.10.2025 Bulletin 2025/44**

(21) Application number: **24305663.7**

(22) Date of filing: **26.04.2024**

(51) International Patent Classification (IPC):
**H04B 7/04** $^{(2017.01)}$     **H04L 25/02** $^{(2006.01)}$

(52) Cooperative Patent Classification (CPC):
**H04B 7/04013; H04L 25/0204**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Fondation B-COM**
**35510 Cesson-Sévigné (FR)**

(72) Inventors:
• **KHALEGHI, Hamidreza**
  **35510 Cesson-Sévigné (FR)**
• **HASKOU, Abdullah**
  **35250 Saint Aubin d Aubigné (FR)**

(74) Representative: **Jacobacci Coralis Harle**
**32, rue de l'Arcade**
**75008 Paris (FR)**

(54) **METHOD FOR ESTIMATING CHARACTERISTICS OF A COMMUNICATION CHANNEL AND ASSOCIATED COMPUTER PROGRAM**

(57)   A method for estimating characteristics of a communication channel comprising the following steps:
- receiving, at a first communication device (2) and via a configurable surface (4), pilot signals from a second communication device (6);
- estimating a first angle ($\theta_g$) defining a direction of the first communication device (2) with respect to the configurable surface (4);
- determining a second angle ($\theta_h$) defining a direction of the second communication device (6) with respect to the configurable surface (4) and which minimizes a value calculated based on a Hermitian inner product between a first matrix comprising the received pilot signals and a second matrix calculated based on the first and second angles;
- determining a first delay associated with the path between the first communication device (2) and the configurable surface (4), and a second delay ($\tau_h$) associated with the path between the second communication device (6) and the configurable surface (4), that minimize a distance calculated based a difference between a first vector of complex gains computed based on possible respective values of the first delay and the second delay, and a second vector of complex gains estimated based on the first and second angles.

**Fig.1**

**Description**

Technical field of the invention

The invention relates to the field of wireless communications.

It is directed in particular to a method for estimating characteristics of a communication channel and to an associated computer program.

State of the art

In order to enhance the coverage provided by base stations in wireless communications, it has been proposed to insert a configurable surface in the communication path between the base station and user equipments such as mobile phones and other electronic devices with means to wirelessly communicate with the base station.

Such a configurable surface (e.g. a RIS or Reconfigurable Intelligent Surface) includes a plurality of configurable elements that may each alter the incident electromagnetic signal. The effect of each configurable element on the electromagnetic signal is generally considered as a phase shift.

Thanks to such a configurable surface, wireless communication is possible between a base station and a user equipment (via the configurable surface) even though the direct path (or line-of-sight path) between the base station and user equipment is blocked, for instance.

However, the use of a configurable surface complicates channel estimation, which is of the utmost importance to correctly configure the communication devices to obtain efficient wireless communications between them.

Summary of the invention

In this context, the invention provides a method for estimating characteristics of a communication channel between a first communication device and a second communication device and via a configurable surface having a plurality of configurable elements, comprising the following steps:

- receiving pilot signals from the second communication device at the first communication device and via the configurable surface;
- estimating at least one first angle defining a direction of the first communication device with respect to the configurable surface;
- determining at least one second angle defining a direction of the second communication device with respect to the configurable surface and which minimizes a value calculated based on a Hermitian inner product between a first matrix comprising the pilot signals as received at the first communication device and a second matrix calculated based on the at least one first angle and on the at least one second angle;
- determining a first delay associated with the path between the first communication device and the configurable surface, and a second delay associated with the path between the second communication device and the configurable surface, that minimize a distance calculated based on at least one difference between a first vector of complex gains computed based on possible respective values of the first delay and the second delay, and a second vector of complex gains estimated based on the at least one first angle and the at least one second angle.

Thus, an efficient method is provided for channel estimation in the presence of a configurable surface.

The second matrix may for instance be calculated based on a Hadamard product between a matrix comprising steering vectors from the first communication device to the configurable surface that are estimated based on the at least one first angle, and a matrix comprising steering vectors from the configurable surface to the second communication device that are estimated based on the at least one second angle.

Precisely, the second matrix may be a product of the transpose of said Hadamard product by a configuration matrix representative of respective configurations of the configurable surface during the transmission of pilot signals; said value may then be equal to the opposite of the square of the module of said Hermitian inner product divided by the square of a norm of the second matrix.

The first matrix comprises for instance $K \times N$ elements representing respectively pilot signals received on an antenna of the first communication device on K subcarriers at N times.

The first communication device may comprise a plurality of antennas. In this case, the step of estimating the at least one first angle may comprise:

- for each of a plurality of configurations of the configurable surface, transmitting, from the first communication device to the second communication device via the configurable surface, a plurality of test signals respectively produced using distinct precoding matrices;
- measuring, by the second communication device, values respectively representative of a quality of transmission of the test signals;
- estimating the at least one first angle based on the measured values.

According to another possibility, the first communication device comprising a first antenna and other antennas, the step of estimating the at least one first angle may comprise:

- for each one of the other antennas, determining estimations of the pilot signal received at the concerned other antenna based on the pilot signal received at the first antenna and for various possible values of the angle defining the direction of the first communication device with respect to the configurable surface;
- estimating the at least one first angle as the possible value for which a distance based on differences, for the various other antennas, between the pilot signal received at the concerned antenna and the determined estimation of the pilot signal received at the concerned antenna is minimum.

Transmitting the pilot signals may comprise transmitting a pilot signal at each of a plurality of times, and the configurable surface may then be respectively configured in a plurality of distinct configurations at said plurality of times.

For instance, the first communication device is a base station and/or the second communication device is a user equipment.

The second angle $\hat{\theta}_h$ may for instance be determined (using a maximum likelihood estimation) as

$$\left(\hat{\theta}_h, \hat{\varphi}_h\right) = \min_{\substack{\theta_h \in [0,\pi] \\ \varphi_h \in [-\frac{\pi}{2},\frac{\pi}{2}]}} \frac{-|\langle \boldsymbol{Y}_1 | (\hat{\boldsymbol{A}}_g \odot \boldsymbol{A}_h(\theta_h, \varphi_h))^T \boldsymbol{\Phi} \rangle|^2}{\left\| (\hat{\boldsymbol{A}}_g \odot \boldsymbol{A}_h(\theta_h, \varphi_h))^T \boldsymbol{\Phi} \right\|^2}$$

where $Y_1$ is said first matrix, $\hat{A}_g$ is a matrix of steering vectors depending on said at least one first angle, $A_h(\theta_h, \varphi_h)$ is a matrix of steering vectors depending on possible values for the second angle, $\varPhi$ is a matrix which columns respectively define various configurations taken by the configurable surface during the receiving step and $\hat{\varphi}_h$ is another angle defining the direction of the second communication device with respect to the configurable surface and concurrently determined.

The first delay and the second delay may then be determined (using another maximum likelihood estimation) as

$$\left(\hat{\tau}_g, \hat{\tau}_h\right) = \min_{\tau_g, \tau_h \in \frac{[d_{FR}, 2.d_{CR}]}{c}} \sum_{a \in A} \left\| \boldsymbol{\rho}_a - \hat{\boldsymbol{\rho}}_a \right\|^2$$

where $\rho_a$ is the first vector of complex gains for an antenna a of the first communication device, $\hat{\rho}_a$ is the second vector of complex gains for an antenna a of the first communication device, A is a subset of antennas (e.g. a pair of antennas) among antennas of the first communication device, c is the celerity of light in vacuum, $d_{FR}$ is an inner radius of the far-field region and $d_{CR}$ is a cell radius.

In order to perform channel estimation in a simpler manner once a first channel estimation has been made as proposed above, the method may further comprise the following steps:

- selecting a plurality of configurations;
- transmitting further pilot signals at a plurality of times respectively associated with the selected configurations, the configurable surface being configured at each time in the selected configuration associated with the concerned time;
- determining an updated value of the at least one second angle which minimizes a further value calculated based on a Hermitian inner product between a third matrix comprising said further pilot signals received at the first communication device and a fourth matrix calculated based on the at least one first angle and on the updated value of the at least one second angle.

The invention also provides a computer program comprising instructions executable by a processor (e.g. a processor of the first communication device) and suitable to implement a method as proposed above when these instructions are executed by the processor.

The invention also provides a (non-transitory) computer readable medium storing such a computer program.

Detailed description of embodiments of the invention

Other possible features of the invention will appear upon reading the description below, made with reference to the appended drawings where :

- Figure 1 is a schematic representation of a system in which the invention may be implemented;
- Figure 2 is a flow chart showing the main steps of a possible embodiment of a method according to the invention;
- Figure 3 represents exchanges between a base station and a user equipment via a configurable surface in the context of a first embodiment of a step of estimating angles;
- Figure 4 represents exchanges between the base station and the user equipment via the configurable surface in the context of a possible variation of this first embodiment;
- Figure 5 represents exchanges between the base station and the user equipment via the configurable surface in the context of another possible variation of this first embodiment.

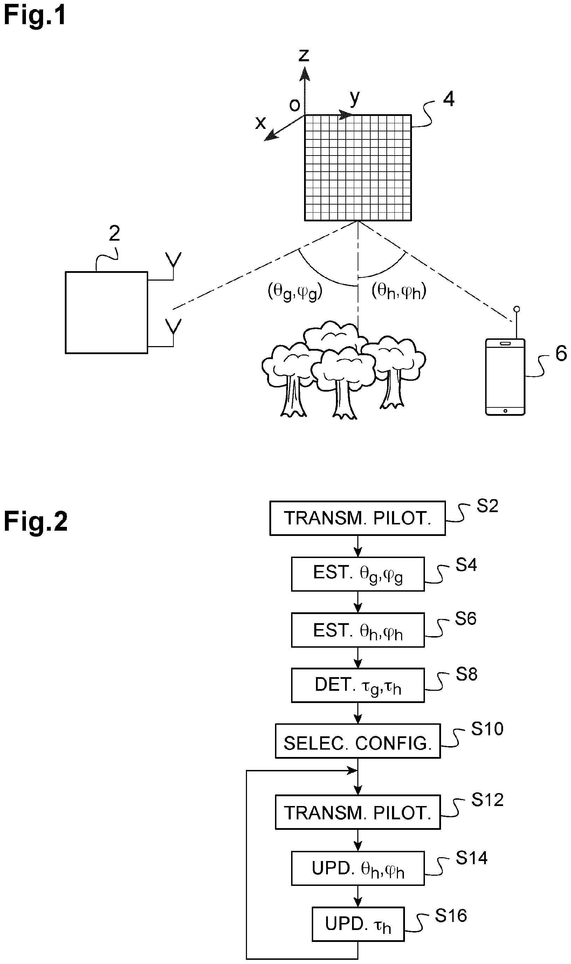

Figure 1 shows a communication system including a first communication device 2 (here a base station), a configurable surface 4 (here a RIS or Reconfigurable Intelligent Surface) and a second communication device 6 (here a user equipment).

The method described below could however be implemented in a communication system including a further communication device, or further communication devices.

For instance, in a typical situation, the communication system includes a base station and a plurality of user equipments.

It is considered in the present example that the base station 2 includes M antennas, the user equipment 6 includes one antenna and the configurable surface includes N configurable elements (for instance configured as a matrix of configurable elements with $N_y$ columns and $N_z$ lines, such that $N_y \times N_z = N$).

Propagation of electromagnetic waves in the communication channel between the base station 2 and the user equipment 6 via the configurable surface 4 can be modelized by the following equation for each antenna a of the base station 2 and each subcarrier:

$$y_{k,a} = \left( g_{k,a}(\tau_{g,a}, \theta_g, \varphi_g) \odot h_k(\tau_h, \theta_h, \varphi_h) \right)^T \Phi_n x_k + w_{k,a}$$

where $g_{k,a}$ is a vector of N complex elements representing the channel response from the base station antenna a to the configurable surface 4, $h_k$ is a vector of N complex elements representing the channel response from the configurable surface 4 to the user equipment 6, $\odot$ is the Hadamard product, $\tau_{g,a}$ is the path delay of the path between base station antenna a and the configurable surface 4, $\tau_h$ is the path delay of the path between the configurable surface 4 and the user equipment 6, $(\theta_g, (\varphi_g)$ are angles representing the direction of the base station 2 relative to the configurable surface 4 (or Angle of Departure from the configurable surface 4), $(\theta_h, \varphi_h)$ are angles representing the direction of the user equipment 6 relative to the configurable surface 4 (or Angle of Arrival to the configurable surface 4), $\Phi_n$ is a vector of N complex elements respectively representing phase shifts applied by the N elements of the configurable surface 4 ($\Phi_n$ is for instance the $n^{th}$ column of a codebook $\Phi \in \mathbb{C}^{N \times N}$), $x_k$ is the complex signal transmitted for the $k^{th}$ subcarrier and $w_{k,a}$ is a complex Additive White Gaussian Noise (AWGN) for the base station antenna a.

This model is particularly appropriate when the configurable surface 4 is in the far-field region of both the base station 2 and the user equipment 6, and considers non-line-of-sight paths as part of the noise $w_{k,a}$.

In the present example, an orthonormal frame of reference (O, x, y, z) is used, where (Oy) and (Oz) are parallel to the horizontal side and the vertical side of the (rectangular) configurable surface 4, respectively, and (Ox) is normal (i.e. perpendicular) to the configurable surface 4. In this case, the angles mentioned above can be defined as follows:

- $\theta_g$ is the elevation of the direction of the base station 2 relative to the configurable surface 4, i.e. the angle between this direction and the axis (O, z);
- $\varphi_g$ is the azimuth of the direction of the base station 2 relative to the configurable surface 4, i.e. the angle between the projection of this direction in the plane (O, x, y) and the axis (O, x);
- $\theta_h$ is the elevation of the direction of the user equipment 6 relative to the configurable surface 4, i.e. the angle between this direction and the axis (O, z);
- $\varphi_h$ is the azimuth of the direction of the user equipment 6 relative to the configurable surface 4, i.e. the angle between the projection of this direction in the plane (O, x, y) and the axis (O, x).

In other embodiments, the situation described above can be represented using a 2D model including the base station 2, the configurable surface 4 and the user equipment 6 in a plane, such that the direction of the base station 2 relative to the configurable surface 4 and the direction of the user equipment 6 relative to the configurable surface 4 may each be represented by a single angle (e.g. formed between the concerned direction and a direction normal to the direction of extension of the configurable surface 4 in the plane just mentioned).

Using the amplitude $\beta_{k,a}(\tau_{g,a}, \tau_h)$ and phase $\omega_{k,a}(\tau_{g,a}, \tau_h)$ of the overall channel (complex) gain $\rho_{k,a}(\tau_{g,a}, \tau_h) = \beta_{k,a}(\tau_{g,a}, \tau_h)e^{j\omega_{k,a}(\tau_{g,a},\tau_h)}$ and steering vectors $a_k(\theta_g, \varphi_g)$, $a_k(\theta_h, \varphi_h)$ between the base station antenna a and the configurable surface 4 and between the configurable surface 4 and the user equipment 6, the equation above can be written as follows:

$$y_{k,a} = \beta_{k,a}(\tau_{g,a}, \tau_h)e^{j\omega_{k,a}(\tau_{g,a},\tau_h)} \left( a_k\left(\theta_g, \varphi_g\right) \odot a_k(\theta_h, \varphi_h) \right)^T \Phi_n x_k + w_{k,a}$$

where:

$$j^2 = -1$$

$$\beta_{k,a}\left(\tau_{g,a}, \tau_h\right) = \frac{\sqrt{G}}{(4\pi)^2 f_k^2 \tau_{g,a}\tau_h}$$

$$\omega_{k,a}\left(\tau_{g,a}, \tau_h\right) = 2\pi f_k\left(\tau_{g,a} + \tau_h\right)$$

$$a_k(\theta, \varphi) = \left[ 1, e^{j\frac{2\pi}{\lambda_k}d_y sin\theta sin\varphi}, \dots, e^{j\frac{2\pi}{\lambda_k}d_y(N_y-1)sin\theta sin\varphi} \right]^T$$

$$\otimes \left[ 1, e^{j\frac{2\pi}{\lambda_k}d_z cos\theta}, \dots, e^{j\frac{2\pi}{\lambda_k}d_z(N_z-1)cos\theta} \right]^T$$

where $\otimes$ is the Kronecker product, G represents the overall antenna gain (or directivity, a fixed parameter possibly measured beforehand or given by the manufacturer of the antenna), $f_k$ is the frequency of the $k^{th}$ subcarrier, $\lambda_k$ the corresponding free-space wavelength (hence $\lambda_k = \frac{c}{f_k}$ where c denotes the celerity of light in vacuum), $d_y$ is the horizontal spacing between two elements of the configurable surface 4 and $d_z$ is the vertical spacing between two elements of the configurable surface 4, with $d_y \leq \frac{\lambda_k}{2}$ and $d_z \leq \frac{\lambda_k}{2}$.

For further explanations on this equation, reference can be made for instance to the article "RIS-Aided Wireless Communications: Prototyping, Adaptive Beamforming, and Indoor/Outdoor Field Trials", by Pei, Xilong, et al. in IEEE Transactions on Communications, Vol. 69, no. 12, 1 Dec. 2021, pp. 8627-8640.

Thus, knowing the configuration of the system and the corresponding fixed parameters, the channel may be estimated by estimating the following parameters (or characteristics): $\tau_{g,a}, \theta_g, \varphi_g, \tau_h, \theta_h, \varphi_h$. Estimating parameters $\tau_{g,a}$ needs only estimating a parameter $\tau_g$ for a single antenna (for instance $\tau_{g,1} = \tau_g$ for antenna 1) as parameters $\tau_{g,a}$ for other antennas can be derived from parameter $\tau_g$ knowing the geometrical relationship between antennas.

Figure 2 is a flow chart showing the main steps of a possible embodiment of a method for estimating these characteristics.

This method starts with a step S2 of transmission of a collection of K x N pilot signals from the user equipment 6 to the base station 2 via the configurable surface 4: this set comprises N time-symbols, with each symbol encompassing the K subcarriers.

In the present example, each pilot signal is a "1", such that the matrix **X** representing pilot signals is a K × N matrix with all elements equal to 1.

When transmitting the $n^{th}$ time-symbol, the configurable surface 4 is configured in accordance with vector $\Phi_n$, i.e.

the N configurable elements of the configurable surface are respectively configured to apply a phase shift given by the corresponding element of the vector $\Phi_n$. As already indicated, $\Phi_n$ is for instance the $n^{th}$ column of a codebook

$$\Phi \in \mathbb{C}^{N \times N}.$$

The configurable surface 4 is thus configured in N distinct configurations over the transmission of the pilot signals.

The pilot signals transmitted from the user equipment 6 are thus received (via the configurable surface 4) at the base station 2. For each antenna a of the base station 2 ($a \in [1.. M]$), the received signal can be written in matrix form as follows (the **N** columns of the matrix respectively corresponding to the N time-symbols, each column comprising K elements corresponding to the K subcarriers):

$$Y_a = diag(\rho_a)\left(A_g \odot A_h\right)^T \Phi + W_a$$

where $diag(v)$ is the diagonal matrix with vector v on its diagonal

$$A_g = \left[\, a_1(\theta_g, \varphi_g), ..., a_K(\theta_g, \varphi_g)\,\right]$$

$$A_h = \left[\, a_1(\theta_h, \varphi_h), ..., a_K(\theta_h, \varphi_h)\,\right]$$

$$\rho_a = \left[\beta_{1,a} e^{i\omega_{1,a}}, ..., \beta_{K,a} e^{i\omega_{K,a}}\right]^T$$

$W_a$ is a complex Additive White Gaussian Noise matrix.

The pilot signal matrix **X is** absent from the formula giving $Y_a$ due to its particular form (all elements being equal to "1") used in the present case as explained above.

The method of Figure 2 then comprises a step S4 of estimating angles $\theta_g$, $\varphi_g$. The obtained estimated values for angles are respectively noted $\hat{\theta}_g$, $\hat{\varphi}_g$. As explained above, these angles $\theta_g$, $\varphi_g$ define the direction of the base station 2 with respect to the configurable surface 4.

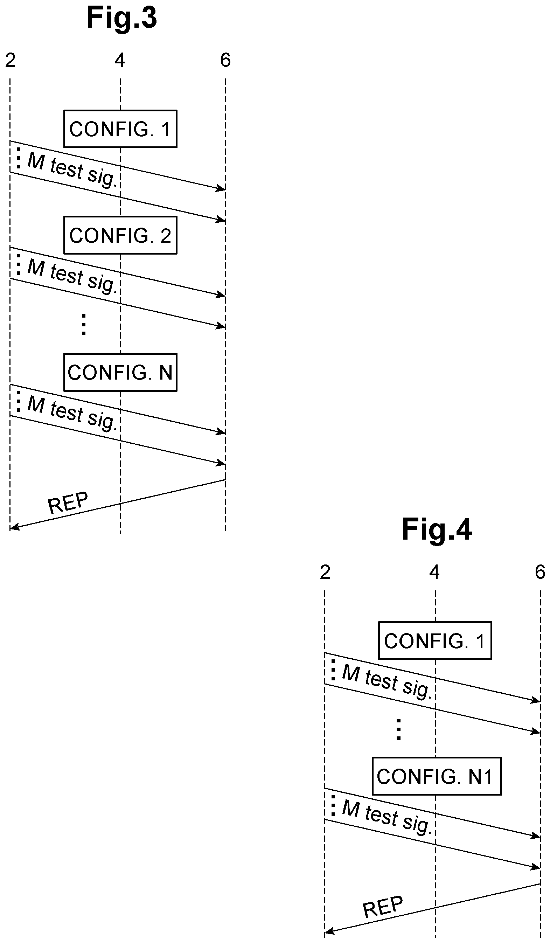

Several possible ways of estimating angles $\theta_g$, $\varphi_g$ are described below, with reference to Figures 3 to 5 in particular.

Although in the present embodiment the step S2 is performed before the step S4, it should be noted that, in some embodiments, the step S2 described above could be performed between the step S4 and the step S6.

The method of Figure 2 then comprises a step S6 of estimating respective values $\hat{\theta}_h$, $\hat{\varphi}_h$ (for the angles $\theta_h$, $\varphi_h$) that maximize a normalized Hermitian inner product between a matrix of signals received at the base station 2 (by a given antenna, here antenna 1) and a matrix including estimations of these signals computed (based on the formula above giving $Y_a$) taking into account (for steering vectors of the matrix $A_g$) the estimated angle values $\hat{\theta}_g$, $\hat{\varphi}_g$ and considering (for steering vectors of matrix $A_h$) the possible values of angles $\theta_h$, $\varphi_h$.

This is for instance performed by first computing, using estimated angle values $\hat{\theta}_g$, $\hat{\varphi}_g$, the estimated matrix $\hat{A}_g$ of steering vectors:

$$\widehat{A}_g = \left[\, a_1(\hat{\theta}_g, \hat{\varphi}_g), ..., a_K(\hat{\theta}_g, \hat{\varphi}_g)\,\right]$$

and then by determining the values $\hat{\theta}_h$, $\hat{\varphi}_h$ that minimize the opposite of the Hermitian inner product mentioned above:

$$\left(\hat{\theta}_h, \hat{\varphi}_h\right) = \min_{\substack{\theta_h \in [0,\pi] \\ \varphi_h \in [-\frac{\pi}{2},\frac{\pi}{2}]}} \frac{-\left|\langle Y_1|(\widehat{A}_g \odot A_h(\theta_h, \varphi_h))^T \Phi\rangle\right|^2}{\left\|(\widehat{A}_g \odot A_h(\theta_h, \varphi_h))^T \Phi\right\|^2}$$

where $|z|$ is the modulus of (complex number) z, $<P|Q>$ is an Hermitian inner product (also called Frobenius inner product) between matrices **P** and **Q**, and $\|M\|$ is the norm of matrix **M**.

Angle values $\hat{\theta}_h$, $\hat{\varphi}_h$ are thus determined using a first maximum likelihood estimation.

The determined angle values $\hat{\theta}_h$, $\hat{\varphi}_h$ thus define the direction of the user equipment 6 with respect to the configurable surface 4 and minimize a value calculated based on a Hermitian inner product between a first matrix $Y_1$

comprising the pilot signals as received at an antenna (here antenna 1) of the first communication device (here the base station 2) and a second matrix (here $(\hat{A}_g \odot A_h(\theta_h, \varphi_h))^T \Phi$) calculated based on the estimated angle values $\hat{\theta}_g$, $\hat{\varphi}_g$ and on any possible angle values for $\theta_h$, $\varphi_h$.

The method of Figure 2 then comprises a step S8 of determining a first delay $\hat{\tau}_g$ associated with the path between the base station 2 and the configurable surface 4, and a second delay $\hat{\tau}_h$ associated with the path between the user equipment 6 and the configurable surface 4, that minimize a distance calculated based on at least one difference (here based on a plurality of differences respectively relating to distinct antennas, precisely a pair of differences respectively relating to a pair of antennas) between a first vector $\rho_a$ of complex gains computed based on possible respective values of the first delay and the second delay and a second vector $\hat{\rho}_a$ of complex gains estimated based on the estimated angle values $\hat{\theta}_g$, $\hat{\varphi}_g$, the determined angle values $\hat{\theta}_h$, $\hat{\varphi}_h$ and pilot signals received at the concerned antenna a.

This step S8 is for instance performed by first computing, for each antenna a of a pair of antennas A = {i, j} where i, j $\in$ [1..M] such that the Euclidian distance between these antennas i and j is maximized, and for each subcarrier k, the amplitude $\hat{\beta}_{k,a}$ and phase $\hat{\omega}_{k,a}$ of the estimated overall gain (for the channel between base station 2 and user equipment 6 via configurable surface 4) as follows:

$$\hat{\beta}_{k,a} = \frac{|\langle \boldsymbol{y}_{k,a} | (\boldsymbol{a}_k(\hat{\theta}_g, \hat{\varphi}_g) \odot (\boldsymbol{a}_k(\hat{\theta}_h, \hat{\varphi}_h))^T \boldsymbol{\Phi} \rangle|}{\|(\boldsymbol{a}_k(\hat{\theta}_g, \hat{\varphi}_g) \odot (\boldsymbol{a}_k(\hat{\theta}_h, \hat{\varphi}_h))^T \boldsymbol{\Phi}\|^2}$$

$$\hat{\omega}_{k,a} = -\arg\left(\langle \boldsymbol{y}_{k,a} | (\boldsymbol{a}_k(\hat{\theta}_g, \hat{\varphi}_g) \odot (\boldsymbol{a}_k(\hat{\theta}_h, \hat{\varphi}_h))^T \boldsymbol{\Phi} \rangle\right)$$

where $y_{k,a}$ is the $k^{\text{th}}$ row of matrix $Y_a$, <u|v> is the Hermitian product between vectors **u** and **v**, $\|\mathbf{v}\|$ is the norm of vector **v** and arg z is the argument of (complex number) z, and steering vectors $a_k(\theta, <p)$ are defined above,
and then by determining the first delay $\hat{\tau}_g$ and the second delay $\hat{\tau}_h$ that minimize the quadratic sum of the differences (for the pair of antennas A = {i, j}) between the first vector $\rho_a$ of complex gains computed based on possible respective values of the first delay $\tau_g$ and the second delay $\tau_h$ and the second vector $\hat{\rho}_a$ of complex gains determined based on values $\hat{\beta}_{k,a}$, $\hat{\omega}_{k,a}$ determined for the same antenna:

$$(\hat{\tau}_g, \hat{\tau}_h) = \min_{\tau_g, \tau_h \in \frac{[d_{FR}, 2.d_{CR}]}{c}} \sum_{a \in A} \|\rho_a - \hat{\rho}_a\|^2$$

where $d_{FR} = \frac{2D^2}{\lambda_0}$ is the inner radius of the far-field region (where $\lambda_0$ is the wavelength of the carrier frequency), D being the biggest dimension of the reconfigurable surface 4, $d_{CR}$ is the cell radius, $\rho_a = \left[\beta_{1,a}(\tau_{g,a}, \tau_h)e^{i\omega_{1,a}(\tau_{g,a}, \tau_h)}, ..., \beta_{K,a}(\tau_{g,a}, \tau_h)e^{i\omega_{K,a}(\tau_{g,a}, \tau_h)}\right]^T$, where $\tau_{g,a}$ is dependent upon the first delay $\tau_g$ taking into account the geometrical relationship between antennas and $\hat{\rho}_a = [\hat{\beta}_{1,a}e^{j\hat{\omega}_{1,a}}, ..., \hat{\beta}_{K,a}e^{j\hat{\omega}_{K,a}}]^T$.

For instance, the sought delay can correspond to the delay at antenna i ($\tau_{g,i} = \tau_g$) and the delay $\tau_{g,j}$ at antenna j can then be determined based on $\tau_g$ (i.e. $\tau_{g,j}$ depends upon $\tau_{g,i} = \tau_g$) taking into consideration the geometrical relationship between antennas i and j.

Delay values $\hat{\tau}_g$, $\hat{\tau}_h$ are thus determined using a second maximum likelihood estimation.

The first maximum likelihood estimation and the second maximum likelihood estimation can for instance be performed using a genetic algorithm. Reference can be made for instance to the article "Genetic Algorithm Optimisation for Maximum Likelihood Joint Channel and Data Estimation", by Chen, S, and Y. Wu in Proceedings of 1998 IEEE International Conference on Acoustics, Speech and Signal Processing. pp. 1157-1160.

As a possible variation however, one at least of the first and second maximum likelihood estimation may be performed by grid search or using a neural network interpolator.

Estimated parameters $\hat{\theta}_g$, $\hat{\varphi}_g$, $\hat{\tau}_g$, $\hat{\theta}_h$, $\hat{\varphi}_h$, $\hat{\tau}_h$ characterising the communication channel between the base station 2 and the user equipment 6 via the configurable surface 4 have thus been produced.

As the estimated parameters $\hat{\theta}_g$, $\hat{\varphi}_g$, $\hat{\tau}_g$ relating to the communication channel between the base station 2 and the configurable surface 4 remain relatively steady, it is possible to perform (at least some) further channel estimations by estimating characteristics of the communication channel between the configurable surface 4 and the user equipment 6 only, i.e. by only updating the parameters $\hat{\theta}_g$, $\hat{\varphi}_g$, $\hat{\tau}_g$.

In this goal, it is possible (at step S10) to first select L configurations amongst the N distinct configurations of the configurable surface 4 used during step S2.

The (restricted) codebook containing this L selected configurations is denoted: $\varPhi_S$.

Said differently, the restricted codebook $\varPhi_S$ contains (as columns) L vectors $\varPhi_n$ extracted from the codebook $\varPhi$ mentioned above.

The number L of vectors (corresponding to configurations of the configurable surface 3) in the restricted codebook $\varPhi_S$ is here equal or greater than 3 and/or much smaller than the number N of vectors (corresponding to configurations of the configurable surface 3) in the codebook $\varPhi$. The number L of vectors in the restricted codebook $\varPhi_S$ is for instance smaller than a tenth of the number N of vectors in the codebook $\varPhi$.

Said differently, the number L of selected configurations is here smaller than a tenth of the number of distinct configurations of the configurable surface 4 used during step S2.

The selected configurations correspond for instance to the L strongest (pilot) signals received by the base station 2 (e.g. on a particular antenna a) during step S2.

If we denote $(\mathbf{Y}_a)_n$ the signals received for the $n^{th}$ time-symbol (i.e. the vector of the $n^{th}$ column of the matrix $\mathbf{Y}_a$), which has thus been received at step S2 while the configurable surface 4 had a configuration defined by the vector $\varPhi_n$, the L selected configurations $\varPhi_n$ corresponds to the L indices n for which the signal strength $\|(K_a)_n\|$ is maximum.

Then, at step S12, pilot signals (defined in a matrix **Xs** comprising K rows and L columns, all elements being here equal to "1") are sent from the user equipment 6 to the base station 2 via the configurable surface 4 over the L time-symbols, the configurable surface 4 being configured in accordance with vector $\varPhi_n$ of the codebook $\varPhi_S$ at the $n^{th}$ time-symbol, i.e. when a pilot signal defined by the $n^{th}$ column of matrix $\mathbf{X}_s$ is transmitted.

We denote $Y_S$ the matrix containing signals received by the particular antenna a (mentioned above) of base station 2 over the L time-symbols ($Y_S$ thus also having K rows and L columns).

The method then comprises a step S14 of determining updated values of angles $\hat{\theta}_h$, $\hat{\varphi}_h$ which minimize a further value calculated based on a Hermitian inner product between matrix $\mathbf{Y}_S$ and another matrix calculated based on previously estimated angles $\hat{\theta}_g$, $\hat{\varphi}_g$, on these updated values $\hat{\theta}_h$, $\hat{\varphi}_h$ and on the (restricted) codebook $\varPhi_S$.

Precisely, in the present case, updated values of angles are determined by a further maximum likelihood estimation as follows:

$$\left(\hat{\theta}_h, \hat{\varphi}_h\right) = \min_{\substack{\theta_h \in [0,\pi] \\ \varphi_h \in [-\frac{\pi}{2},\frac{\pi}{2}]}} \frac{-|\langle Y_S | (\widehat{A}_g \odot A_h(\theta_h, \varphi_h))^T \varPhi_S \rangle|^2}{\left\|(\widehat{A}_g \odot A_h(\theta_h, \varphi_h))^T \varPhi_S\right\|^2}$$

The method then comprises a step S16 of determining an update value of the delay $\hat{\tau}_h$ on the path between the configurable surface 4 and the user equipment 6.

It is proposed here to determine this updated value based on the previously estimated angles $\hat{\theta}_g$, $\hat{\varphi}_g$, on the previously estimated delay $\tau_g$, on the updated angle values $\hat{\theta}_h$, $\hat{\varphi}_h$ and on the restricted codebook $\varPhi_S$ as follows:

for each subcarrier k, the amplitude of the overall gain $\hat{\beta}_k$ is computed as

$$\hat{\beta}_k = \frac{|\langle y_k | (a_k(\hat{\theta}_g, \hat{\varphi}_g) \odot (a_k(\hat{\theta}_h, \hat{\varphi}_h))^T \varPhi_S \rangle|}{\left\|(a_k(\hat{\theta}_g, \hat{\varphi}_g) \odot (a_k(\hat{\theta}_h, \hat{\varphi}_h))^T \varPhi_S\right\|^2}$$

and the corresponding delay $\tau_{h,k}$ as

$$\tau_{h,k} = \frac{\sqrt{G}}{(4\pi)^2 f_k^2 \tau_g \hat{\beta}_k}$$

where $y_k$ is the $k^{th}$ row of matrix $\mathbf{Y}_S$ (corresponding to the $k^{th}$ subcarrier)

(these estimations being made in connection with a particular antenna a of the base station 2 as indicated above).

An average value of the computed delays $\tau_{h,k}$ may be used as the updated value of $\hat{\tau}_h$:

$$\hat{\tau}_h = \frac{1}{K}\sum_{k=1}^{K}\tau_{h,k}$$

Thus, updated values have been determined for estimated parameters $\hat{\theta}_h$, $(\hat{\varphi}_h$, $\hat{\tau}_h$.

The method can loop to step S12 to obtain a new updated estimation of these parameters $\hat{\theta}_h$, $\hat{\varphi}_h$, $\hat{\tau}_h$, possibly after a predetermined (idle) time.

Over a longer period of time, the method of Figure 2 can be implemented again starting at step S2 in order to also adapt parameters $\hat{\theta}_g$, $\hat{\varphi}_g$, $\hat{\tau}_g$ to possible changes in the environment.

Several possibilities will now be presented for estimation of angles $\theta_g$, $\varphi_g$ at step S4.

According to a first embodiment, which is now described with reference to Figures 3 to 5, step S4 comprises:

- for each of at least some possible configurations of the configurable surface (defined for instance in the codebook $\Phi$), transmitting, from the base station 2 to the user equipment 6 via the configurable surface 4, a plurality of test signals respectively produced using distinct precoding matrices;
- measuring, by the user equipment 6, values respectively representative of a quality of transmission of the test signals;
- sending, from the user equipment to the base station, at least one report REP containing at least some of these measured values;
- estimating the angles $\theta_g$, $\varphi_g$ based on the measured values (here based on the measured values received at the base station 2 in a report REP).

For each configuration of the configurable surface used in this step, the number of the transmitted test signals is for instance equal to the number M of antennas in the base station 2. Said differently, in the present example, for each configuration of the configurable surface, M distinct test signals are sent at M respective distinct times (each test signal involving the transmission by the M antennas of electromagnetic signals produced using a precoding matrix associated with the specific transmission time).

In practice, each test signal is for instance a Channel Status Information - Reference Signal (CSI-RS) and/or the report REP is for instance a Channel Status Information (CSI) report.

The measured values are each for instance a measured power of the test signal received by the user equipment 6, such as the Received Signal Received Power (RSRP) contained in the CSI report. As a possible variation, the measured values may be a signal-to-noise ratio, for instance the Signal-to-Noise and Interference Ratio (SINR) contained in the CSI report.

The estimated angles $\hat{0}_g$, $\hat{\varphi}_g$ may then be the angles associated with the precoding matrix of the base station antenna used when transmitting a test signal resulting in the maximum measure value among the values measured throughout the transmission of the various test signals.

According to a first possibility shown in Figure 3, the configurable surface 4 is successively configured in the N configurations defined in the codebook $\Phi$ and, while the configuration surface 4 is in a given configuration (defined by the vector vector $\Phi_n$, i.e. the N configurable elements of the configurable surface 4 are respectively configured to apply a phase shift given by the corresponding element of the vector $\Phi_n$), M test signals are transmitted from the base station 2 to the user equipment 6 via the configurable surface 4.

The user equipment 6 measures the received power (e.g. RSRP) and/or the signal-to-noise ratio (e.g. SINR) of each test signal and, once the MxN test signals have been received, transmit to the base station 2 a report REP (here a CSI report) indicating the test signal (associated with a given configuration and a given precoding matrix) for which the measured value (here the received power or the signal-to-noise ratio) is maximum.

As explained above, the base station 2 can deduce the estimated angles $\hat{\theta}_g$, $\hat{\varphi}_g$ from the given precoding matrix for which the measured value of the test signal was maximum.

This first possibility makes it possible to obtain an accurate estimation of angles, but necessitates a rather large number (NxM) of test signals in practice.

According to a second possibility shown in Figure 4, the configurable surface 4 is successively configured in only N1 configurations defined in the codebook $\Phi$, N1 being greater or equal to 1 and/or much smaller than the number of configurable elements N (N1 being for instance smaller than a tenth of the number of configurable elements N).

As in the first possibility, while the configuration surface 4 is in a given configuration (defined by the vector $\Phi_n$, i.e. the N configurable elements of the configurable surface 4 are respectively configured to apply a phase shift given by the corresponding element of the vector $\Phi_n$), M test signals are transmitted from the base station 2 to the user equipment 6 via the configurable surface 4.

The user equipment 6 measures the received power (e.g. RSRP) and/or the signal-to-noise ratio (e.g. SINR) of each test signal and, once the MxN1 test signals have been received, transmit to the base station 2 a report REP (here a CSI report) indicating the test signal (associated with a given configuration and a given precoding matrix) for which the measured value (here the received power or the signal-to-noise ratio) is maximum.

As for the first possibility, the base station 2 can deduce the estimated angles $\hat{\theta}_g$, $\hat{\varphi}_g$ from the given precoding matrix for which the measured value of the test signal was maximum.

This second possibility involves less test signals as only MxN1 test signals are used (i.e. here less than a tenth of the MxN test signals used in the first possibility).

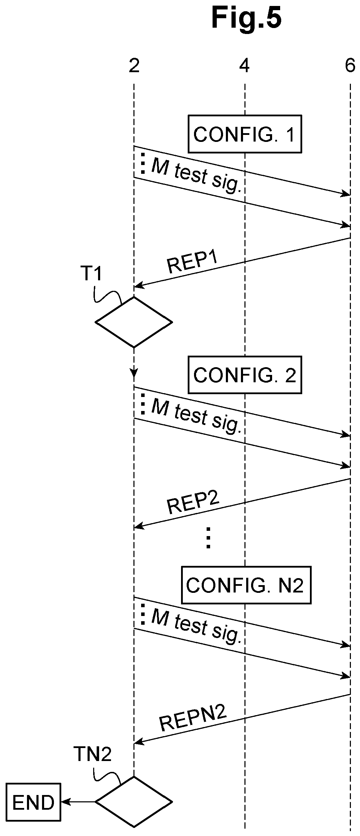

According to a third possibility shown in Figure 5, the configurable surface 4 is successively configured in distinct configurations amongst the N configurations defined in the codebook $\Phi$ and, while the configuration surface 4 is in a given configuration (defined by the vector vector $\Phi_n$, i.e. the N configurable elements of the configurable surface 4 are respectively configured to apply a phase shift given by the corresponding element of the vector $\Phi_n$), M test signals are transmitted from the base station 2 to the user equipment 6 via the configurable surface 4.

For the M test signals transmitted while the configurable surface 4 is in a given configuration, the user equipment 6 measures the received power (e.g. RSRP) and/or the signal-to-noise ratio (e.g. SINR) of each of the M test signals and transmit to the base station 2 a report REP1, REP2, REPN2 (here a CSI report) indicating the maximum measured value (i.e. here the maximum received power or signal-to-noise ratio) and the test signal (associated with a given precoding matrix) for which the measured value (here the received power or the signal-to-noise ratio) is maximum.

The base station 2 compares (by performing a test T1, TN2) the received maximum measured value to a predefined threshold, and further proceeds depending on the result of the test (comparison):

- if the maximum measured value is below the predefined threshold (as in test T1 in Figure 5), the method continues by changing the configuration of the configurable surface 4 and sending M test signals while the configuration is in the new configuration, as explained above;
- if the maximum measured value is above (or equal to) the predefined threshold (as in test TN2), no further test signals are transmitted and the base station 2 can deduce the estimated angles $\hat{\theta}_g$, $\hat{\varphi}_g$ from the precoding matrix for which the measured value of the test signal was maximum as reported in the last received report REPN2.

The third possibility makes it possible to reduce the number of test signals (as MxN2 test signals are used, N2 being generally inferior to N) compared to the first possibility, while still scanning a reasonable number of configurations if necessary (thanks to the use of the predefined threshold).

According to a second embodiment, the estimation of angles $\theta_g$, $\varphi_g$ at step S4 is performed by:

- for each antenna (except a particular antenna), determining estimations of the pilot signal received at the concerned antenna based on the pilot signal received at the particular antenna and for various possible values of angles $\theta_g$, $\varphi_g$;
- estimating angles $\hat{\theta}_g$, $\hat{\varphi}_g$ as the possible value for each angle $\theta_g$, $\varphi_g$ for which a distance based on differences, for the various antennas (except the particular antenna), between the pilot signal received at the concerned antenna and the determined estimation of the pilot signal received at the concerned antenna is minimum.

The pilot signals just mentioned may be the same as the pilot signals used in step S2 (in which case step S4 should be performed after step S2 as described above), or may be specific pilot signals used only for estimation of the angles $\theta_g$, $\varphi_g$.

As explained in the appendix below, the pilot signal received at an antenna b (distinct from the particular antenna, here for instance antenna 1) can be written based on the pilot signal received at the particular antenna (here antenna 1) as follows:

$$\widehat{Y}_b = (\rho_b \oslash \rho_1) \odot Y_1 + Z_b$$

($\oslash$ being the Hadamard division and assuming $Z_b$ is an Additive White Gaussian Noise) and can thus be estimated using:

$$\widehat{Y}_b = \vartheta_b(\theta_g, \varphi_g) \odot Y_1 + Z_b$$

where $\vartheta_b$ is a phase vector with K elements:

$$\vartheta_b(\theta_g, \varphi_g) = [e^{j2\pi f_1(\tau_{g,b} - \tau_{g,1})}, ..., e^{j2\pi f_K(\tau_{g,b} - \tau_{g,1})}]^T$$

where each delay $\tau_{g,a}$ associated with an antenna a depends on the angles $\theta_g$, $\varphi_g$ (and on the position of the antenna a in the base station 2, which is fixed for a given situation).

The angles $\hat{\theta}_g$, $\hat{\varphi}_g$ can then be estimated as follows:

$$\left(\hat{\theta}_g, \hat{\varphi}_g\right) = \min_{\substack{\theta_g \in [0,\pi] \\ \varphi_g \in [-\frac{\pi}{2}, \frac{\pi}{2}]}} \sum_b \left\| Y_b - \hat{Y}_b \right\|^2$$

APPENDIX

The matrix form expression (already given above for any antenna a) of the signal received by the particular antenna (antenna 1) is:

$$Y_1 = \rho_1 \odot \left(A_g \odot A_h\right)^T \Phi + W_1$$

Knowing that $\Phi\Phi^{-1} = Id$ , this formula can be rewritten as:

$$Y_1 \Phi^{-1} - W_1 \Phi^{-1} = \rho_1 \odot \left(A_g \odot A_h\right)^T$$

Thus, $A_h$ can be written as:

$$A_h = \left(\Phi^T\right)^{-1} Y_1^T \oslash \rho_1^T \oslash A_g - \left(\Phi^T\right)^{-1} W_1^T \oslash \rho_1^T \oslash A_g$$

Considering the second term as an Additional White Gaussian Noise gives:

$$A_h = \left(\Phi^T\right)^{-1} Y_1^T \oslash \rho_1^T \oslash A_g + Z_1$$

Introducing this expression into the matrix form expression of the signal received at antenna b results in:

$$Y_b = \rho_b \odot \left(A_g \odot ((\Phi^T)^{-1} Y_1^T \oslash \rho_1^T \oslash A_g + Z_1)\right)^T \Phi + W_b$$

such that, after rearrangement, the signal received at antenna b can be estimated as:

$$\hat{Y}_b = (\rho_b \oslash \rho_1) \odot Y_1 + Z_b$$

where $Z_b$ is also considered as Additional White Gaussian Noise.

**Claims**

1. A method for estimating characteristics of a communication channel between a first communication device (2) and a second communication device (6) and via a configurable surface (4) having a plurality of configurable elements, comprising the following steps:

   - receiving pilot signals from the second communication device (6) at the first communication device (2) and via the configurable surface (4);
   - estimating at least one first angle ($\theta_g$, $\varphi_g$) defining a direction of the first communication device (2) with respect to the configurable surface (4);

- determining at least one second angle ($\theta_h$, $\varphi_h$) defining a direction of the second communication device (6) with respect to the configurable surface (4) and which minimizes a value calculated based on a Hermitian inner product between a first matrix comprising the pilot signals as received at the first communication device (2) and a second matrix calculated based on the at least one first angle and on the at least one second angle;

- determining a first delay ($\tau_g$) associated with the path between the first communication device (2) and the configurable surface (4), and a second delay ($\tau_h$) associated with the path between the second communication device (6) and the configurable surface (4), that minimize a distance calculated based on at least one difference between a first vector of complex gains computed based on possible respective values of the first delay and the second delay, and a second vector of complex gains estimated based on the at least one first angle and the at least one second angle.

2. A method according to claim 1, wherein the second matrix is calculated based on a Hadamard product between a matrix comprising steering vectors from the first communication device (2) to the configurable surface (4) that are estimated based on the at least one first angle, and a matrix comprising steering vectors from the configurable surface (4) to the second communication device (6) that are estimated based on the at least one second angle.

3. A method according to claim 2, wherein the second matrix is a product of the transpose of said Hadamard product by a configuration matrix representative of respective configurations of the configurable surface (4) during the transmission of pilot signals, and wherein said value is equal to the opposite of the square of the module of said Hermitian inner product divided by the square of a norm of the second matrix.

4. A method according to any of claims 1-3, wherein the first matrix comprises K x N elements representing respectively pilot signals received on an antenna of the first communication device (2) on K subcarriers at N times.

5. A method according to any of claims 1-4, wherein the first communication device (2) comprises a plurality of antennas, and wherein the step of estimating the at least one first angle comprises:

- for each of a plurality of configurations of the configurable surface (4), transmitting, from the first communication device (2) to the second communication device (6) via the configurable surface (4), a plurality of test signals respectively produced using distinct precoding matrices;
- measuring, by the second communication device (6), values respectively representative of a quality of transmission of the test signals;
- estimating the at least one first angle based on the measured values.

6. A method according to any of claims 1-4, wherein the first communication device (2) comprises a first antenna and other antennas, and wherein the step of estimating the at least one first angle comprises:

- for each one of the other antennas, determining estimations of the pilot signal received at the concerned other antenna based on the pilot signal received at the first antenna and for various possible values of the angle defining the direction of the first communication device (2) with respect to the configurable surface (4);
- estimating the at least one first angle as the possible value for which a distance based on differences, for the various other antennas, between the pilot signal received at the concerned antenna and the determined estimation of the pilot signal received at the concerned antenna is minimum.

7. A method according to any of claims 1-6, comprising the following steps:

- selecting a plurality of configurations;
- transmitting further pilot signals at a plurality of times respectively associated with the selected configurations, the configurable surface (4) being configured at each time in the selected configuration associated with the concerned time;
- determining an updated value of the at least one second angle which minimizes a further value calculated based on a Hermitian inner product between a third matrix comprising said further pilot signals received at the first communication device (2) and a fourth matrix calculated based on the at least one first angle and on the updated value of the at least one second angle.

8. A method according to any of claims 1-7, wherein transmitting the pilot signals comprises transmitting a pilot signal at each of a plurality of times, and wherein the configurable surface (4) is respectively configured in a plurality of distinct configurations at said plurality of times.

9. A method according to any of claims 1-8, wherein the first communication device is a base station (2) and wherein the second communication device is a user equipment (6).

10. A method according to any of claims 1-9, wherein the second angle $\hat{\theta}_h$ is determined as

$$\left(\hat{\theta}_h, \hat{\varphi}_h\right) = \min_{\substack{\theta_h \in [0,\pi] \\ \varphi_h \in [-\frac{\pi}{2}, \frac{\pi}{2}]}} \frac{-|\langle Y_1 | (\widehat{A}_g \odot A_h(\theta_h, \varphi_h))^T \Phi \rangle|^2}{\left\| (\widehat{A}_g \odot A_h(\theta_h, \varphi_h))^T \Phi \right\|^2}$$

where $Y_1$ is said first matrix, $\hat{A}_g$ is a matrix of steering vectors depending on said at least one first angle, $A_h(\theta_h, \varphi_h)$ is a matrix of steering vectors depending on possible values for the second angle, $\Phi$ is a matrix which columns respectively define various configurations taken by the configurable surface (4) during the receiving step and $\hat{\varphi}_h$ is another angle defining the direction of the second communication device (6) with respect to the configurable surface (4) and concurrently determined.

11. A method according to any of claims 1-10, wherein the first delay and the second delay are determined as

$$\left(\hat{\tau}_g, \hat{\tau}_h\right) = \min_{\tau_g, \tau_h \in \frac{[d_{FR}, 2.d_{CR}]}{c}} \sum_{a \in A} \|\rho_a - \widehat{\rho}_a\|^2$$

where $\rho_a$ is the first vector of complex gains for an antenna a of the first communication device (2), $\hat{\rho}_a$ is the second vector of complex gains for an antenna a of the first communication device (2), A is a subset of antennas among antennas of the first communication device (2), c is the celerity of light in vacuum, $d_{FR}$ is an inner radius of the far-field region and $d_{CR}$ is a cell radius.

12. Computer program comprising instructions executable by a processor and suitable to implement a method according to any of claims 1-11 when these instructions are executed by the processor.

**Fig.1**

**Fig.2**

## Fig.3

CONFIG. 1

M test sig.

CONFIG. 2

M test sig.

CONFIG. N

M test sig.

REP

## Fig.4

CONFIG. 1

M test sig.

CONFIG. N1

M test sig.

REP

# Fig.5

Europäisches
Patentamt

European
Patent Office

Office européen
des brevets

# EUROPEAN SEARCH REPORT

**Application Number**

EP 24 30 5663

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/318177 A1 (ZHOU ZHENGYI [CN] ET AL) 5 October 2023 (2023-10-05) * paragraphs [0238] - [0240], [0271], [0272]; figure 15 * | 1-12 | INV. H04B7/04 H04L25/02 |

TECHNICAL FIELDS
SEARCHED      (IPC)

H04B
H04L
H01Q

The present search report has been drawn up for all claims

| Place of search | Date of completion of the search | Examiner |
|---|---|---|
| Munich | 21 October 2024 | Muntean, T |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................

& : member of the same patent family, corresponding
document

EPO FORM 1503 03.82 (P04C01)

**EP 4 641 939 A1**

## ANNEX TO THE EUROPEAN SEARCH REPORT
## ON EUROPEAN PATENT APPLICATION NO.

EP 24 30 5663

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2024

| Patent document cited in search report | Publication date | Patent family member(s) | Publication date |
|---|---|---|---|
| US 2023318177 A1 | 05-10-2023 | CN 114257475 A | 29-03-2022 |
| | | CN 116711158 A | 05-09-2023 |
| | | EP 4207491 A1 | 05-07-2023 |
| | | US 2023318177 A1 | 05-10-2023 |
| | | WO 2022057918 A1 | 24-03-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PEI, XILONG et al.** RIS-Aided Wireless Communications: Prototyping, Adaptive Beamforming, and Indoor/Outdoor Field Trials. *IEEE Transactions on Communications*, 01 December 2021, vol. 69, 8627-8640

- **CHEN, S ; Y. WU**. "Genetic Algorithm Optimisation for Maximum Likelihood Joint Channel and Data Estimation. *Proceedings of 1998 IEEE International Conference on Acoustics, Speech and Signal Processing.*, 1157-1160